# EUROPEAN PATENT APPLICATION

(11) **EP 4 628 923 A1**
(43) Date of publication of application: **08.10.2025**
(21) Application number: 24191448.0
(22) Date of filing: 29.07.2024
(51) Int. Cl.: G01S 7/00, G01S 13/76

(54) **METHOD OF LOCATING A UWB-ENABLED DEVICE**

(30) Priority: 05.04.2024 IN 202441028166
(71) Applicant: NXP B.V., 5656 AG Eindhoven (NL)
(72) Inventor: Parthasarathi, Srivathsa Masthi, 5656AG Eindhoven (NL); Venkateshaiah, Sreenivasaiah Hanumapura, 5656AG Eindhoven (NL); Stark, Michael, 5656AG Eindhoven (NL)
(74) Representative: Krott, Michel

(57) **Abstract**

A method of locating a UWB enabled mobile device (10) in a UWB based transit deployment (100) is disclosed. Performed is a data transfer process within a specified proximity between the UWB enabled device (10) and anchors of a transit gate (G1...Gn), wherein multiple distance measurements (RS1... RSn) are performed between the transit gate (G1... Gn) and the UWB enabled device (10) during the data transfer process. Multiple ranging processes or ranging rounds during the data transfer phase are carried out in this way. The multiple ranging processes support improved security as regards data transfer between UWB enabled mobile device and transit gate.

## Description

### TECHNICAL FIELD

The present disclosure relates to the technical field of Ultra-wideband (UWB) communication. In particular, the present disclosure relates to a method of locating a UWB-enabled device. Furthermore, the present disclosure relates to a UWB-enabled device. Furthermore, the present disclosure relates to computer implemented methods for carrying out the proposed method.

### BACKGROUND

FiRa^{®} UWB, also known as FiRa Ultra-Wideband, is a high-speed wireless communication technology that operates at very high frequencies, typically between 3.1 GHz and 10.6 GHz. Ultra-Wideband (UWB) technology is characterized by its ability to transmit large amounts of data over short distances, making it ideal for applications such as high-speed data transfer, location tracking, and radar imaging.

FiRa^{®} UWB specifies how data transfer along with ranging can be done and in this case a block alignment between a controller device and a controlee device is done by means of a RCM (ranging control message) transmitted by the controller device. Data payload information elements (IEs) are piggy backed with ranging messages. With this conventional method there can be only one ranging round in a single phase and a controlee (mobile device) is compelled to perform ranging and data transfer which can be a problem when series of CM/RSP sequence to be done during the fare transaction between the transit gate and the mobile device.

US 11,646,758 B2 discloses UWB message transmission method and device, method and device for estimating position on the basis of UWB messages.

US 2021/0289320 A1 discloses localization device and method of operating a localization device.

### SUMMARY

According to a first aspect of the present disclosure there is provided a method of locating a UWB-enabled device, comprising the steps:
- performing a data transfer process within a specified proximity between the UWB enabled device and anchors of a transit gate; and
- performing multiple distance measurements between the transit gate and the UWB enabled device during the data transfer process.

Multiple ranging processes or ranging rounds during the data transfer phase are carried out in this way. The multiple ranging processes support improved security as regards data transfer between UWB enabled mobile device and transit gate. As a consequence, during the transaction, a user carrying the UWB enabled device remains always located also if the data transaction is e.g. appr. 300ms and the whole transmission scheme is e.g. appr. 400ms. With the proposed method it is possible to allocate the UWB enabled device very precisely during the fare transaction process.

According to a further aspect, there is provided a UWB based transit gate, comprising means to carry out the proposed method.

According to a further aspect, there is provided a UWB enabled mobile device, comprising means to carry out the proposed method.

According to a further aspect, there is provided a computer implemented method comprising executable instructions which, when executed by a UWB enabled transit gate cause said UWB enabled transit gate to carry out the proposed method.

According to a further aspect, there is provided a computer implemented method comprising executable instructions which, when executed by a UWB enabled device cause said UWB enabled device to carry out the proposed method.

According to one or more embodiments, the multiple distance measurements are performed by means of a double sided two way ranging, DS-TWR process.

According to one or more embodiments, wherein data transfer TX slots and data transfer RX slots are used to synchronize the multiple distance measurements.

According to one or more embodiments, a single control message type 1, CM Type 1 is used to initiate the multiple distance measurements.

According to one or more embodiments, the multiple distance measurements are performed within a data structure having a specified number of data slots.

According to one or more embodiments, the multiple distance measurements are performed within a data structure having a specified duration.

According to one or more embodiments, the UWB enabled device is configured to decide to use at least two of the multiple distance measurements.

According to one or more embodiments, entries in the RDML are used to specify addresses of the controller and the controlee of the multiple distance measurements.

According to one or more embodiments, a scheduling scheme of the multiple distance measurements contains at least two distance measurements.

### BRIEF DESCRIPTION OF DRAWINGS

The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. It is noted, that in different figures, similar or identical elements or features are provided with the same reference signs. In order to avoid unnecessary repetitions elements or features which have already been elucidated with respect to a previously described embodiment are not elucidated again at a later position of the description.
- FIG. 1: shows a scenario of a UWB transit deployment with a user carrying a UWB enabled device;
- FIG. 2: shows a conventional data structure used for distance measurements within UWB systems;
- FIG. 3: shows a data structure according to an embodiment of the proposed method;
- FIG. 4: shows a transmission scheme with eight transit gates of a UWB system, in which the proposed method may be applied;
- FIG. 5: shows the data structure of FIG. 3 in more detail and applied to the data structure of FIG. 4;
- FIG. 6: shows example entries in a ranging device management list (RDML) of a UWB system; and
- FIG. 7: shows a principle flow of an embodiment of the proposed method.

### DESCRIPTION OF EMBODIMENTS

FiRa specifies a method with data transfer messages DTPCM and CM Type 1 for DS-TWR to be combined in one slot, which can facilitate data transfer and DS-TWR between the transit gate and the user mobile device. With said method it is possible to allocate only one DS-TWR ranging round within the phase, which makes the user mobile device to sacrifice data transfer slots to DS-TWR making the fare transaction time to increase. The proposed method uses the above mentioned method and uses implicit slot locations to realize DS-TWR ranging. The proposed method provides flexibility to the UWB enabled mobile device to participate in ranging rounds belonging to slots where no data transfer is required and the data originated from the device to be used as a ranging frame.

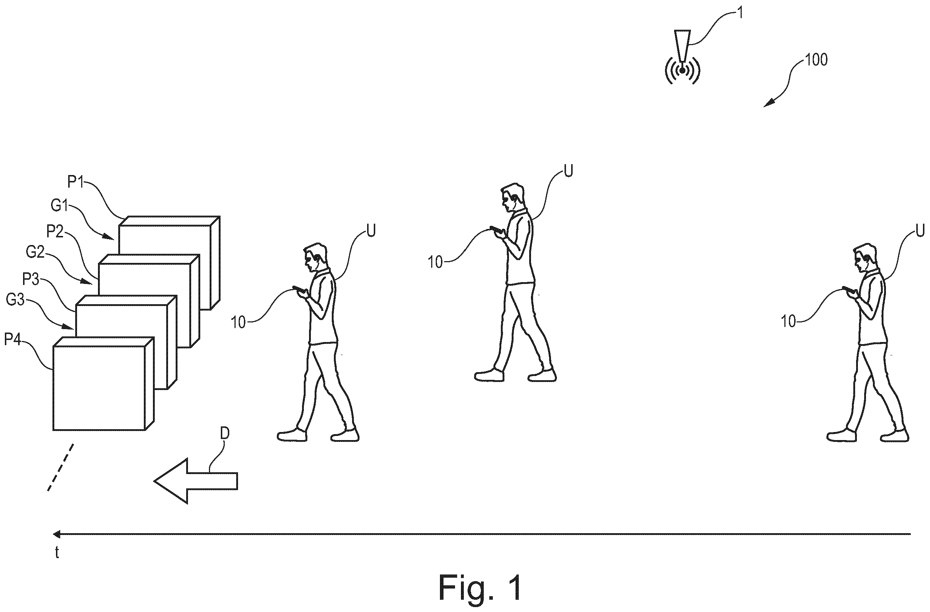

FIG. 1 shows a station entry area of a UWB based transit deployment 100, wherein a Bluetooth^{®} Low Energy beacon of a DL-TDoA device 1 is used to wake up a passenger's UWB enabled device 10 (e.g. mobile device or tag). During the time, the passenger U is walking towards transit gates G1... G3 untracked navigation is carried out. In this context, short messages are transmitted by UWB anchors mounted either in the transit gate area or over a wider area in the station. Any UWB enabled device 10 can receive those short messages and use the information contained in them to compute its own position within the station. All of this is accomplished without the need for a UWB enabled device 10 to transmit any UWB message which ensures the privacy of the passenger U, since only the passenger's UWB enabled device 10 knows its own position within the UWB based transit deployment 100.

As shown in FIG. 1, an entry space between two transit gate pillars P1... P4 represents a transit gate G1... G3. The gate pillars P1... P4 are equipped with UWB gate anchors (not shown) with directional antennas facing towards the user U with the UWB enabled mobile device 10. In the scenario of FIG. 1 there are four gate anchors resulting in three transit gates G1... G3. Of course, the number four as regards the pillars/anchors is only exemplary in this context.

In the shown scenario of FIG. 1, typically, distance measurements are performed during UWB communication sessions referred to as so called "ranging sessions" or "ranging rounds" or "ranging sets" RS1... RSn. A typical UWB-based ranging session RS1... RSn includes one or more messages (i.e. frames that are part of a distance estimation sequence) transmitted from a UWB communication device (which may also be referred to as a "reader") to one or more other UWB communication devices, as well as one or more messages in response to those frames, which are transmitted back to the communication device by the other communication device. It is noted that, depending on the role assigned to the communication device and the other communication devices in this message exchange, either the communication device may act as an "initiator" or "controller" (in which case the other communication devices act as "responders" or "controlees") or the communication device may act as a "responder" or "controlee" (in which case the other communication devices act as "initiators" or "controllers").

Accordingly, an important application of UWB is to perform accurate distance measurements between two transit gates and the UWB enabled device 10 in order to perform localization of the UWB enabled device 10 by means of trilateration. Since modem location-aware devices should support multiple applications at the same time, also multiple distance measurement sessions should be supported at the same time. Implementing a scheduler is a common way of managing the execution of multiple ranging sessions. For instance, a typical scheduler has a task (e.g. a distance measurement session) and its priority as input.

In FIG. 1 t represents a timeline and a direction of passing the transit gates G1...G3 is indicated by an arrow D. When the user U enters the deployment area the user device may use out-of band (OOB) method to wake-up and then participate in the device discovery process via contention-based ranging (CBR). The device discovery process is a function executed by the transit gate to identify the user U who is potentially close to the transit gate G1... G3 and his intent to pass through one of the transit gates G1... G3. When the user U is sufficiently close to the transit gate G1...G3 then the action is considered as commitment to make the payment and the transit gate executes the fare transaction (data transfer process). Once the proximity estimation with CBR is done by the transit gate anchor it assigns the user device for transit fare transaction. The gate anchor shall ensure the proximity of the user to itself during the fare transaction by performing secure DS-TWR with the authenticated UWB enabled user device 10.

It is noted that FIG. 1 only shows an exemplary of a proposed scenario of a UWB based transit deployment 100 (e.g. transit station of a public transport arrangement). The UWB communication sessions perform a location procedure via distance measurements between specified gate anchors of the transit gates G1... G3 and the UWB enabled device 10 being equipped with a UWB communication unit. For example, the UWB enabled mobile device can be NFC-enabled and can thus automatically perform a fare transaction with one of the transit gates G1... G3 without a need to bring the UWB enabled mobile device in contact with the transit gate G1... G3. A pass of the transit gate device suffices to perform the fare transaction. As a result, at the same time there are performed a localization session via distance measurements (trilateration) between three gate anchors of the corresponding gates and the UWB enabled mobile device.

Most of the time, the UWB communication sessions are performed as so called "hybrid sessions", which means that in relation to the transit gate there are carried out two parts of the UWB communication session. A first part (content access period, contention-based ranging) performs an invitation to all devices in the environment of the gate G1 to take part at the second UWB communication session, which means that the UWB enabled device 10 is invited to answer.

If the UWB enabled device 10 has approached sufficiently to the transit gate G1... G3, the UWB enabled device 10 is invited to answer. The UWB enabled device 10 then accepts the invitation and communicates with the transit gate. The second part of the UWB communication session is the transaction between the transit gate and the UWB enabled mobile device.

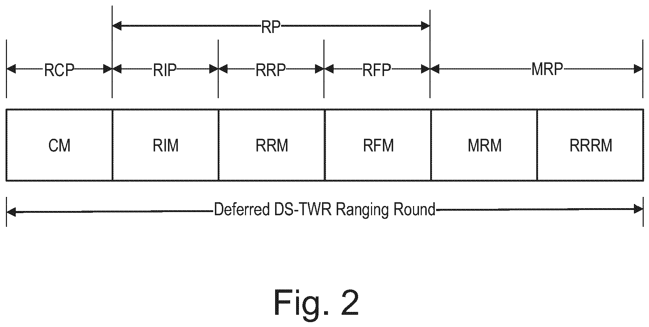

Referring to FIG. 2 now, a typical FiRa specified DS-TWR ranging round data structure is shown. In a complete ranging round block there can be multiple of such ranging rounds (distance measurements) RS1... RSn and each ranging round has a control message (CM) transmitted in the first slot. If this needs to be realized with data transfer then the ranging round message needs to be transmitted along with a data message payload IE and in the existing specification there can be only one ranging round set possible which is not adequate for the use case. With this feature, there can be N possible ranging round set allocated against the data transfer slots and all the ranging sets are bound to one CM transmitted at the beginning of the ranging block.

FIG. 2 shows a conventional data structure of a deferred DS-TWR ranging round. A ranging round control phase (RCP) and a ranging phase (RP) comprises the following different messages: ranging initial message (RIM), ranging response message (RRM) and ranging final message (RFM), followed by a measurement reporting phase (MRP), in which there are different messages as well.

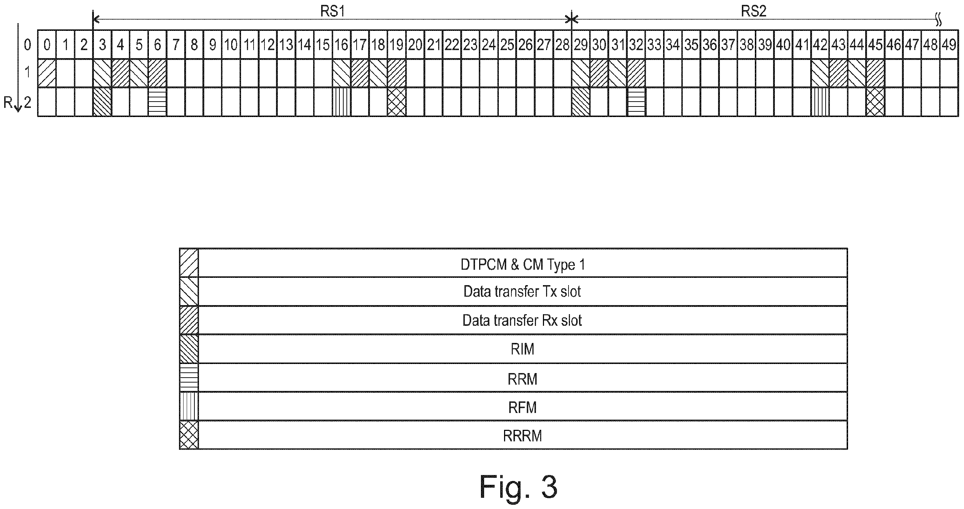

FIG. 3 shows a transmission scheme with two ranging round (distance measurement) sets RS1, RS2, wherein slot #0 represents the control message (CM) type 1 and data transfer phase control message used in FiRa standardized data transfer protocol (DTPCM) and the various hatchings of slots refer to possible non-deferred double sided two way ranging DS-TWR defined in FiRa specification with two-way ranging protocol ranging round sets. The whole sequence of the transmission scheme is initiated by a controller (e.g. transit gate), wherein the controlee is represented by the UWB enabled device 10, which looks into the message transmitted by the transit gate G1... Gn and will then participate accordingly to the ranging set. A slot allocation done against the data transfer slots for DS-TWR ranging is specified in the FiRa specification. With this slot allocation method the MAC implementation on the transit gate G1... Gn has full control of the assignment of the data transfer for the DS-TWR ranging depending on the data load to complete the transaction.

Similarly, the UWB enabled device 10 as controlee device receives this message and can select the ranging set Rs1... RSn depending on the transaction related data to be transmitted. It is not necessary to send all those frames, depending on a type of message what exactly is happening in a DS-TWR case, additional frames as regards data frames, RFRAMs and optional data frames (not shown) may be transmitted. In a typical DS-TWR case, the initiator will not order the distance measurement, unless the responder transmits the time-of-flight. Row #0 of the transmission scheme of FIG. 3 shows an index of slots. Row #1 of the scheme of FIG. 3 shows the transmission from the transit gate, row#2 shows what is happening from the transit gate, where the transit gate is allocating all of these slots and the controlee implicitly then participates in any of the ranging sets. This particular slot distribution is representative of how both controller and controlee communicate during the ranging round. It is up to the controlee to which ranging set RS1... RSn he responds, i.e. the distance measurement is carried out. This could be the case as regards all ranging sets RS1... RSn, however could also be the case to at least two specific ranging set RS1... RSn.

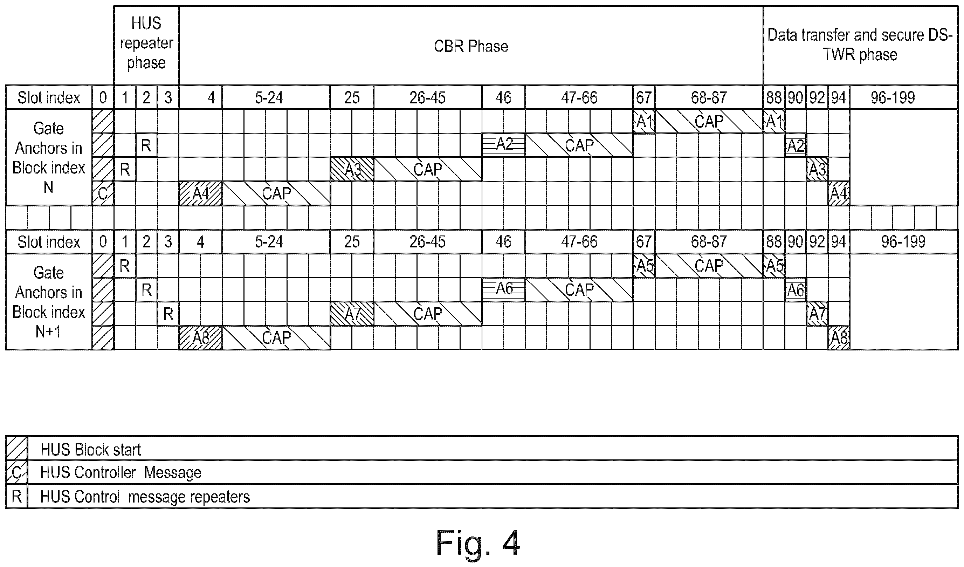

FIG. 4 shows a timing diagram of a communication between transit gate anchors being arranged in two groups (not shown) with an UWB enabled mobile device. One recognizes a scheduling of three phases: HUS repeater phase (slots #1... #3), CBR phase (slots #4... #87) and data transfer and secure DS-TWR phase (slots #88... #199). A start of the whole scheduling starts with a control message type 3 (HUS controller message), which is transmitted in slot#0 (HUS Block start) by gate anchor A4 and which is received by all gate anchors by means of repetition processes R in the HUS repeater phase, in which said control message type 3 is transmitted to the remaining gate anchors under usage of gate anchors.

The HUS repeater phase is followed by the contention based ranging (CBR) phase, wherein in the CBR phase communications with pairs of gate anchors A4/A8, A3/A7, A2/A6 and A1/A5 with the UWB enabled mobile device are performed. Finally, in the data transfer and secure DS-TWR phase, data transactions (e.g. fare transactions and date transmission) are performed between a specified gate and the UWB enabled mobile device.

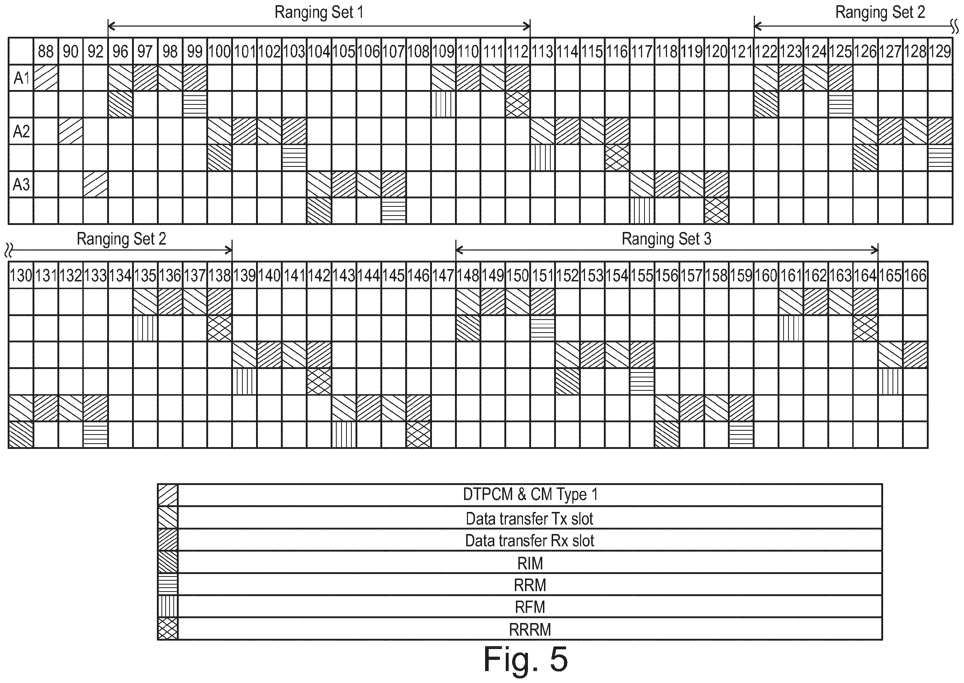

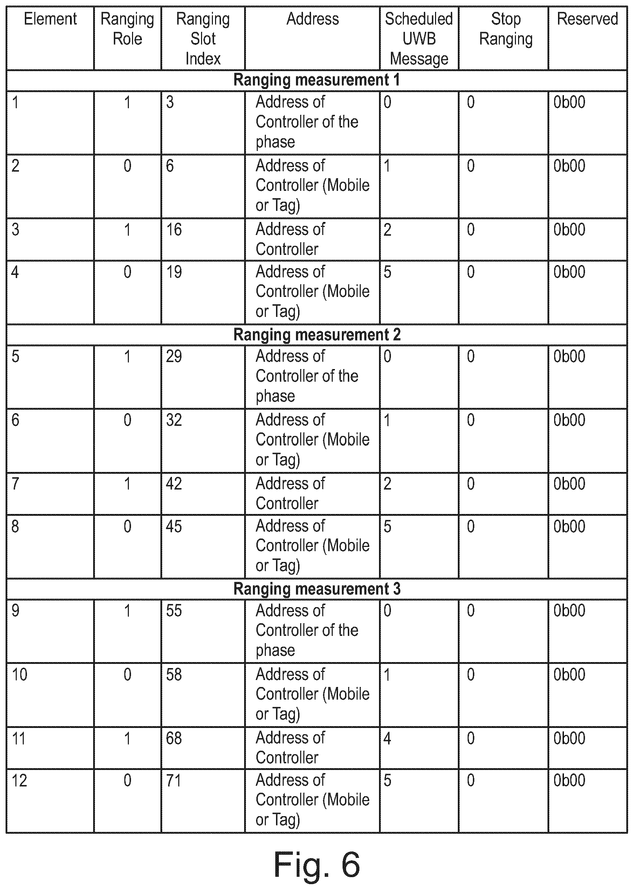

FIG. 5 shows the data transfer phase of the hybrid scheduled ranging (HUS) session according to the transmission scheme of FIG. 3) in more detail with the participation of three transit gates G1... G3 of the scenario of FIG. 1. The transit gate anchor acts as the controller of secure DS-TWR processes and assigns possible ranging round sets RS1... RSn. Each ranging round set RS1... RSn is based on non-deferred ranging containing RIM, RRM, RFM and ranging result report message (RRRM) slots. The following rules apply for the gate anchors while performing the DS-TWR processes:
1. The control message (CM) type 1 is sent in the same slot as the DTPCM
2. The CM type 1 is sent after the DTPCM payload information element (IE)
3. The ranging device management list (RDML) contains the possible ranging round set of the HUS phase (refer to FIG. 6 also for example reference)
4. It shall allow the controlee device to participate in any of the allowed ranging round sets

The following rules are applicable for the controlee device (mobile device or tag) participating in the secure DS-TWR ranging rounds:
1. The controlee processes the control messages received in the start slot index of the phase. In a case, that the message contains the CM type 1, then it processes the RDML and participates in at least one of the ranging round sets. However, the controlee device can participate also in all or more than one ranging round set.

The following requirements are applicable for the controller device (transit gate anchor) and controlee device (mobile device or tag) participating in the secure DS-TWR and data transfer in the same slot.
1. The MAC data service data unit (MDSDU) is piggybacked with UWB messages.
2. The MDSDU is carried in dedicated data message payload information elements which follows the payload information element of the UWB Message.
3. When the data message payload IE is included in the ranging message, it shall be placed after the UWB Message payload IE.
4. If the size of the UWB message and MDSDU exceeds the frame size, then MDSDU shall segment into multiple DM payload IEs and shall send the pending DM payload IEs in next available slots.
5. All MDSDU segments received from the same transmitting device shall be reassembled at the end of the ranging round and forwarded as a MDSDU.
6. The following slot order for scheduling and the corresponding frame type shall be considered while performing non-deferred DS-TWR.

In slots # 88, 90, 92 and 94 the above principles are applied in the context of the transmission scheme of FIG. 4. One recognizes, that the scheme of FIG. 5 is applied to the scheme of FIG. 4. In effect, the data transfer and secure DS-TWR phases comprising the multiple distance measurements RS1... RSn is carried out with a specified gate having been determined by a trilateration process, which results in a localization of the UWB enabled device 10 by means of multiple distance measurements between two gate anchors and the UWB enabled device 10.

FIG. 6 shows example references for entries in the ranging device management list (RDML). One recognizes three ranging round sets RS1... RS3 with corresponding slot indexes and addresses of controller (anchor of transit gate) and controlee (UWB enabled device). In effect, each ranging round set RS 1... RSn contains at least two distance measurements. Needless to say, that each ranging round set may contain more than two distance measurements. Moreover, a slot duration of the transmission schemes of FIGs. 3, 5 and a duration of the whole transmission schemes of said figures may be adapted according to requirements.

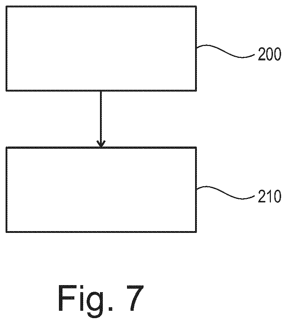

FIG. 7 shows in principle a flow of the proposed method.

In a step 200 there is performed a data transfer process within a specified proximity between the UWB enabled device 10 and anchors of a transit gate G1... Gn.

In a step 210 there are performed performing multiple distance measurements RS1... RSn between the transit gate G1... Gn and the UWB enabled device (10) during the data transfer process.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

Additionally, unless expressly stated to the contrary, the terms "first", "second", "third", etc. are intended to distinguish the particular nouns that modify (e.g. session, device, element, unit, condition, node, module, activity, session, step, operation, etc.). Unless expressly stated to the contrary, the use of these terms is not intended to indicate any type of order, rank, importance, temporal sequence, or hierarchy of the modified noun. For example, "first X" and "second X" are intended to designate two "X" elements that are not necessarily limited by any order, rank, importance, temporal sequence, or hierarchy of the two elements. Furthermore, as referred to herein, "at least one of" and "one or more of' can be represented using the "(s)" nomenclature (e.g. one or more element(s)).

Moreover, it should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

### Reference Numerals:

- 1: downlink TDoA device
- 10: UWB enabled device
- 100: UWB based transit deployment
- 200.. 210: method steps
- A1... An: anchors
- D: direction
- G1... Gn: transit gates
- P1... Pn: pillars
- RS1 ... RSn: distance measurement
- t: time
- U: user

## Claims

1. Method of locating a UWB enabled device (10), comprising the steps:
- performing a data transfer process within a specified proximity between the UWB enabled device (10) and anchors of a transit gate (G1... Gn); and
- performing multiple distance measurements (RS 1... RSn) between the transit gate (G1... Gn) and the UWB enabled device (10) during the data transfer process.

2. Method according to claim 1, wherein the multiple distance measurements (RS 1... RSn) are performed by means of a double sided two way ranging, DS-TWR process.

3. Method according to claim 2, wherein data transfer TX slots and data transfer RX slots are used to synchronize the multiple distance measurements (RS 1... RSn).

4. Method according to claim 3, wherein control messages type 1, CM Type 1 are used to initiate the multiple distance measurements (RS 1... RSn).

5. Method according to any of the preceding claims, wherein the multiple distance measurements (RS 1... RSn) are performed within a data structure having a specified number of data slots.

6. Method according to claim 5, wherein the multiple distance measurements (RS 1... RSn) are performed within a data structure having a specified duration.

7. Method according to any of the preceding claims, wherein the UWB enabled device (10) is configured to decide to use at least two of the multiple distance measurements (RS 1... RSn).

8. Method according to any of the preceding claims, wherein entries in the RDML are used to specify addresses of the controller and the controlee of the multiple distance measurements (RS 1... RSn).

9. Method according to any of the preceding claims, wherein a scheduling scheme of the multiple distance measurements (RS 1... RSn) contains at least two distance measurements (RS 1... RSn).

10. UWB based transit gate (G1... Gn), comprising means to carry out the method according to any of the preceding claims.

11. UWB enabled mobile device (10), comprising means to communicate with a UWB based transit gate (G1... Gn) according to claim 10.

12. Computer implemented method comprising executable instructions which, when executed by a UWB enabled transit gate (100) cause said UWB enabled transit gate (100) to carry out the method of any of the claims 1 to 9.

13. Computer implemented method comprising executable instructions which, when executed by a UWB enabled device (10) cause said UWB enabled device (10) to carry out the method of any of the claims 1 to 9.
